# NEUE EUROPÄISCHE PATENTSCHRIFT

(11) **EP 1 942 037 B2**
(45) Veröffentlichungstag und Bekanntmachung des Hinweises auf die Entscheidung über den Einspruch: **21.06.2017**
(45) Hinweis auf die Patenterteilung: 01.09.2010
(21) Anmeldenummer: 08004060.3
(22) Anmeldetag: 12.05.2005
(51) Int. Cl.: B60T 8/1755

(54) **Schlingerbremse für Fahrzeuganhänger**
Roll brake for vehicle suspension
Frein à roulis pour une remorque de véhicule

(30) Priorität: 19.05.2004 DE 202004008160 U
(43) Veröffentlichungstag der Anmeldung: 09.07.2008
(62) Teilanmeldung aus: 05010373.8
(73) Patentinhaber: AL-KO Kober AG, D-89359 Kötz (DE)
(72) Erfinder: Beck, Gerhard, 89343 Jettingen-Scheppach (DE); Fink, Bernd, 89359 Kötz (DE); Heim, Harald, 89349 Burtenbach (DE); Köhler, Robert, 86480 Waltenhausen (DE); Kober, Kurt, 89359 Kötz (DE); Sailer, Wolfgang, 6290 Mayerhofen/Zillertal (AT)
(74) Vertreter: Ernicke, Klaus Stefan

(56) Entgegenhaltungen:
- DE-A1- 2 914 940
- DE-A1- 2 952 093
- DE-A1- 10 215 617
- DE-C2- 3 937 210
- DE-C2- 19 913 342
- DE-U1- 9 016 918
- DE-U1- 20 312 130
- DE-U1- 29 607 092
- DE-U1- 29 721 843
- DE-U1-202004 006 324
- GB-A- 2 362 693

## Beschreibung

Die Erfindung betrifft eine Schlingerbremse für gebremste Fahrzeuganhänger mit den Merkmalen im Oberbegriff des Hauptanspruchs.

Bei Fahrzeuganhängern, insbesondere solchen mit starrer Deichsel, z.B. in Form von Wohnwagen, Pritschenhänger, Fahrzeugtransporter etc. bestehen Probleme bei der Stabilisierung im Schlingerfall. Dem versucht man mit Reibbremsen an der Anhängerkupplung entgegen zu wirken, was in erster Linie eine Präventivmaßnahme ist, um das Auftreten von Schlingerbewegungen des Fahrzeuganhängers möglichst schon im Ansatz zu verhindern. Wenn jedoch ein Fahrzeuganhänger Schlingerbewegungen größeren Ausmaßes ausführt, sind die Reibbremsen nur noch begrenzt wirksam.

Die GB 2 267 134 A zeigt eine gattungsgemäße Schlingerbremse.

Aus der DE 203 12 130 U1 ist eine weitere Schlingerbremse bekannt, die eine Messeinrichtung zur Erkennung von Schlingererscheinungen und einen Stellantrieb mit einem Motor und einem Stellelement aufweist, welches mit dem Bremsgestänge in Eingriff treten kann. Die Betätigung des Stellelements erfolgt über einen Federspeicher, der von einem Motor mittels einer Nocke oder dergl. gespannt wird und sich durch eine Auslösung von der Messeinrichtung im Schlingerfall entspannt. Die bei der Schlingerbremsung entwickelte Bremskraft wird vom Federspeicher bestimmt. Verschleißerscheinungen in der Bremsanlage und insbesondere Längungen der Bremsseilzüge mindern über den verlängerten Stellweg und die Federentspannung die Bremskraft. Bei der vorbekannten Schlingerbremse ist weder eine Steuerung, noch eine Regelung der Bremskräfte möglich.

Die DE 102 15 617 A1 lehrt eine Schlingerbremse mit einem elektrischen Stellantrieb, der am Deichselkopf und im Bereich der Auflaufbremse angeordnet ist und auf den Schwenkhebel der Auflaufeinrichtung einwirkt. Diese Anordnung erfordert einen erhöhten Bauaufwand und stört den Anhängerbetrieb erheblich. Sie lässt sich auch nur schwer nachrüsten. In einer anderen Ausführungsform greift der Stellantrieb der Schlingerbremse direkt an den Bremsseilzügen an. Dies erfordert für jede Radbremse einen eigenen Stellantrieb und bringt einen entsprechend höheren Bau- und Kostenaufwand mit sich.

Es ist daher Aufgabe der vorliegenden Erfindung, eine bessere Möglichkeit zum Bekämpfen von Schlingererscheinungen aufzuzeigen.

Die Erfindung löst diese Aufgabe mit den Merkmalen im Hauptanspruch.
Die beanspruchte Schlingerbremse hat den Vorteil, dass sie auftretende Schlingerbewegungen des Fahrzeuganhängers bereits sehr früh feststellen und ihnen durch gezieltes Betätigen der Radbremsen entgegen wirken kann. Mittels einer Messeinrichtung werden Auftreten und Ausmaß der Schlingerbewegung festgestellt und ausgewertet, wobei in Abhängigkeit von der Auswertung mittels einer Steuerung und einem motorischen Stellantrieb ein Stellelement direkt betätigt wird, welches auf die Radbremsen an der Verbindungsstelle zwischen den einzelnen Bremszügen und der Bremsübertragungseinrichtung der Betriebsbremse einwirkt.

Erfindungsgemäß bestimmen die Motorbewegungen die Bremsbetätigung und die Bewegungen des Stellelements, wobei auch eine Regelung der Schlingerbremsung möglich ist. Durch die Motorbetätigung kann die entwickelte Bremskraft den Bedürfnissen angepasst werden. Eine Selbsthemmung im Antriebsstrang hält die Bremsbetätigung auch bei abgeschaltetem Motor aufrecht und entlastet ihn.

Ferner bleibt die volle Funktion der Betriebsbremse im Fahrbetrieb erhalten, wobei auch die Funktionen von Betriebsbremse und Schlingerbremse einander überlagert werden können und sich ergänzen. Durch ein längenstabiles oder mittels Federeinrichtung begrenzt längenveränderliches Stellelement ist der Stellantrieb direkt mit dem Verbindungselement zwischen der Bremsübertragungseinrichtung und den Bremszügen verbunden, so dass die Stellkräfte der Schlingerbremse durch eine Motorbetätigung genau gesteuert und auch nach den Schlingererscheinungen geregelt werden können.

Das Stellelement wirkt vorzugsweise mit einseitiger Anlage, insbesondere mit Druck, auf das Verbindungselement ein. Die Einwirkung kann unmittelbar durch direkten Angriff am Verbindungselement oder mittelbar durch Einwirken auf die Bremsübertragungseinrichtung erfolgen. Eine Federeinheit im oder am Stellelement kann hierbei den Anlagekontakt aufrecht erhalten und ggf. die Bremsseilzüge nachspannen. Hierdurch wirkt die Schlingerbremse schnell und sicher sowie nur im Schlingerfall auf die Radbremsen ein, wobei ggf. die Wirkung der Betriebs- und Auflaufbremse kontrolliert überlagert wird. Im normalen Fahrbetrieb werden die normalen Bremsfunktionen durch die Schlingerbremse nicht beeinträchtigt.

Das Stellelement kann mehrteilig sein und aus einem Abtriebsorgan des Motors und einer Schubstange bestehen, die durch einen Beschlag direkt verbunden oder mittels der besagten Federeinheit gekoppelt sein können. Das Stellelement kann ferner in der Länge einstellbar sein, was einerseits der Anpassung an unterschiedliche Einbausituationen und andererseits einer Notentriegelung der Schlingerbremse dient. Durch Verkürzung des Stellelements kann die Schlingerbremsfunktion bei Ausfall oder Blockade des Antriebs oder dgl. wieder aufgehoben und der normale Fahrbetrieb ermöglicht werden.

Die Schlingerbremse kann in die Bremseinrichtung neuer Fahrzeuganhänger integriert sein. Sie lässt sich alternativ auch an vorhandenen Fahrzeuganhängern nachrüsten. In beiden Fällen ist es von Vorteil, die Schlingerbremse als kompakte integrierte Baueinheit auszubilden und im Bereich der Achse anzubringen. An dieser Stelle stört sie am wenigsten und lässt sich trotzdem gut montieren und einstellen. Durch das Einwirken auf das Verbindungselement lassen sich zudem Unterschiede im Bremsverhalten der Radbremsen ausgleichen, was z.B. über eine Kippbewegung eines als Waagbalken ausgebildeten Verbindungselementes möglich ist.

Besonders günstig und nachrüstungsfreundlich ist eine Montagemöglichkeit am achsseitigen Widerlager der Bremszüge. Dies ist eine für die verschiedenen Achsformen meist einheitliche Montagestelle. Mittels einer geeigneten Halterung lässt sich die Schlingerbremse somit universell an einer Vielzahl von Anhänger- und Achstypen anbringen und insbesondere nachrüsten. Alternativ ist eine Montage am Achskörper möglich, was sich in erster Linie für die Erstausrüstung empfiehlt.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1 und 2:: Eine Seitenansicht und eine Draufsicht auf einen Fahrzeuganhänger mit einer im Achsbereich angebrachten Schlingerbremse,
- Figur 3:: eine vergrößerte Draufsicht auf eine Achse und eine Schlingerbremse,
- Figur 4:: eine abgebrochene und vergrößerte perspektivische Ansicht der Schlingerbremse,
- Figur 5:: eine vergrößerte Draufsicht auf eine Schlingerbremse,
- Figur 6:: einen Längsschnitt durch die Schlingerbremse gemäß Schnittlinie VI/VI von Figur 5,
- Figur 7:: eine Frontansicht der Schlingerbremse gemäß Pfeil VII von Figur 5,
- Figur 8:: eine Draufsicht auf eine Achse mit einer Variante der Schlingerbremse,
- Figur 9:: eine perspektivische Ansicht einer weiteren Variante der Schlingerbremse und
- Figur 10:: eine perspektivische Ansicht einer Halterung zur Befestigung der Schlingerbremse am Widerlager der Bremszüge.

Die Efindung betrifft eine Schlingerbremse (13) für einen Fahrzeuganhänger (1) sowie einen mit einer solchen Schlingerbremse (13) ausgerüsteten Fahrzeuganhänger (1).

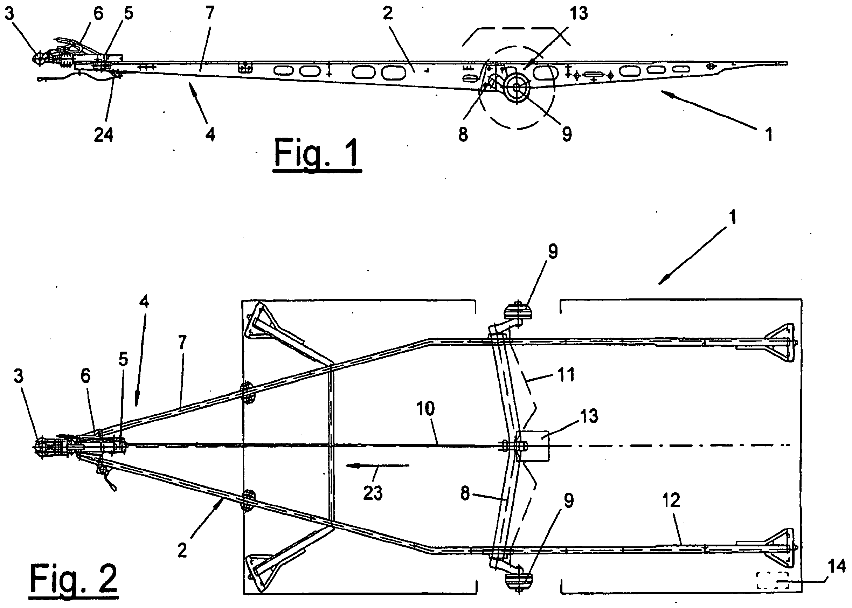

Ein solcher Fahrzeuganhänger (1) ist in Figur 1 und 2 schematisch und beispielsweise dargestellt. Er besteht aus einem Fahrgestell (2), welches eine frontseitige starre Deichsel (7) mit einer Anhängerkupplung (3), z.B. einer Kugelkopfanhängerkupplung, und mindestens eine Achse (8) sowie eine Bremseinrichtung (4) aufweist. Das Fahrgestell (2) besitzt zwei Längsträger (12), die ggf. durch Querträger verbunden sind. Die Deichsel (7) ist in der gezeigten Ausführungsform als V-Deichsel in Verlängerung der Längsträger (12) ausgebildet. Alternativ kann es sich um eine Rohrdeichsel handeln. In weiterer Abwandlung kann das Fahrgestell (2) nur aus einer Deichsel, einem Aufbau und einer Achse bestehen, wobei auf Längsträger (12) und andere Fahrgestellteile verzichtet wird. Der Fahrzeuganhänger (1) kann auch einen Aufbau aufweisen, der in Figur 2 schematisch durch Umrisslinien angedeutet ist.

Die Bremseinrichtung (4) des Fahrzeuganhängers (1) besteht aus einer Betriebsbremse (5) und einer Schlingerbremse (13) sowie ggf. einer Handbremseinrichtung (6). Die Betriebsbremse (5) kann in beliebig geeigneter Art ausbildet sein und ist üblicherweise als Auflaufbremse gestaltet. Die Auflaufeinrichtung und der Handbremshebel sind in diesem Fall am Deichselkopf angeordnet. Die Betriebs- und Handbremse (5,6) können außerdem noch eine Nachstelleinrichtung (24) zur Kompensation von Verschleißerscheinungen der Bremseinrichtungen (4) aufweisen.

Die Bremskräfte der Betriebs- und Handbremse (5,6) werden mittels einer Bremsübertragungseinrichtung (10) und über Bremszüge (11) zu den Radbremsen (9) übertragen. Die Bremsübertragungseinrichtung (10) ist im gezeigten Ausführungsbeispiel als Bremsgestänge ausgebildet, kann altemativaberauch aus einem Bremsseil oder einem anderen Element bestehen. Auch eine hydraulische Übertragungseinrichtung ist möglich. Die zentrale Bremsübertragungseinrichtung (10) ist mit den einzelnen Bremszügen (11) über ein Verbindungselement (16), z.B. einen Waagbalken, verbunden. Die Bremszüge (11) sind als Seilzüge bzw. Bowdenzüge ausgebildet, deren Mäntel an einem Widerlager (21) an der Achse (8) eingehängt und abgestützt sind, wobei die Bremsseile ein Stück vorstehen und am Waagbalken (16) mit gegenseitiger Distanz befestigt, z.B. eingehängt sind. Das Bremsgestänge (10) greift mittig am Waagbalken (16) zwischen den Bremszügen (11) an. Es durchsetzt z.B. im Querschnitt U- oder L-förmigen Waagbalken (16) und ist am Ende mit einem Mitnehmer (28), z.B. einer Kugelmutter, versehen, die mit einem abgerundeten Kopfteil innenseitig am Waagbalken (16) angreift und die in Zugrichtung (23) ausgeübten Zugkräfte der Betriebs- und Handbremse (5,6) auf den Waagbalken (16) und die Bremszüge (11) überträgt. Die Kugelmutterbildet ein Drehlager für den Waagbalken (16), der darauf schwimmend gehalten ist und der durch eine Kippbewegung eine Kompensation unterschiedlicher Radbremskräfte ermöglicht. Das Bremsgestänge (10) weist ferner einen rückseitig über den Mitnehmer (28) vorstehenden axialen Zapfen (27) auf.

Die Schlingerbremse (13) dient dazu, beim Auftreten von Schlingerbewegungen des Fahrzeuganhängers (1), die z.B. durch Fahrmanöver, Windkräfte oder dergleichen ausgelöst werden können, den Fahrzeuganhänger (1) durch Betätigung der Radbremsen (9) wieder zu stabilisieren. Die Schlingerbremse (13) tritt dabei in Funktion, auch wenn die Betriebsbremse (5) nicht anspricht.

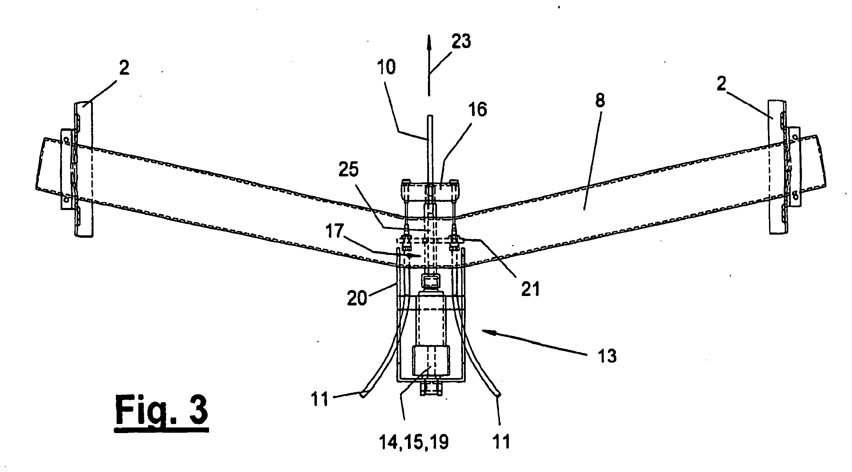

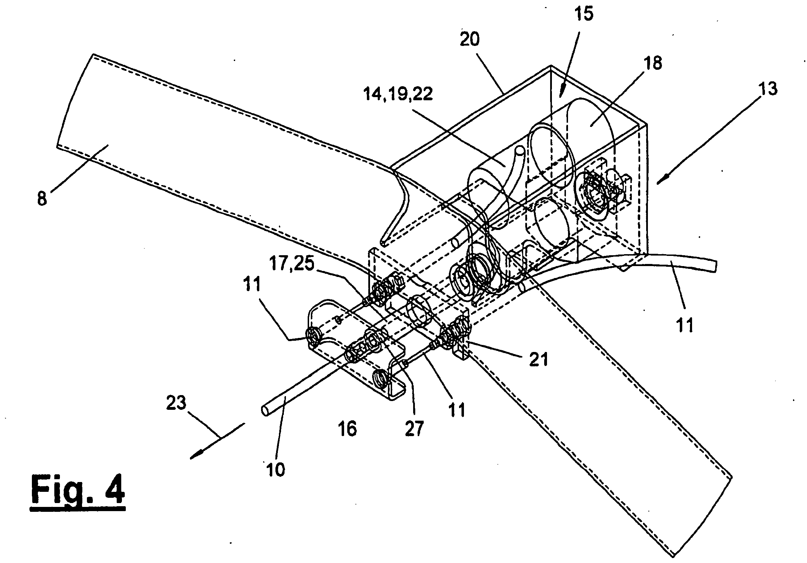

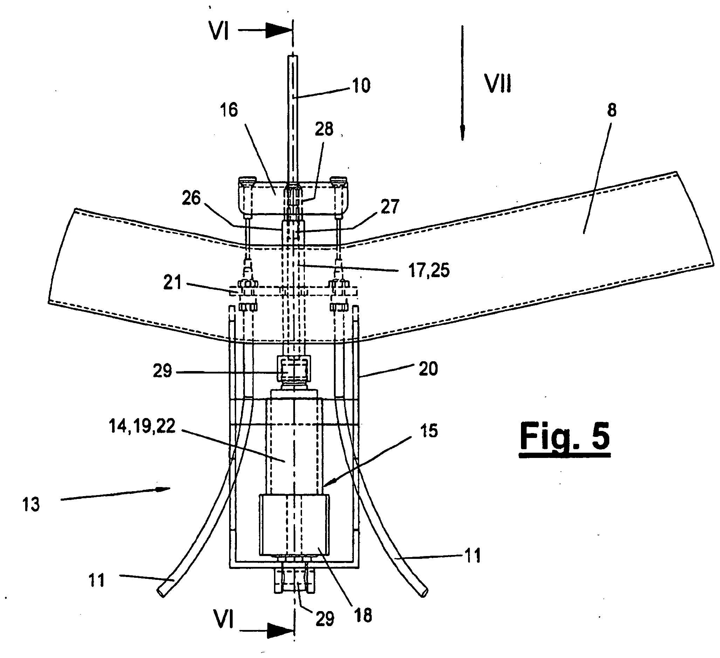

Die Schlingerbremse (13) ist vorzugsweise als kompakte Baueinheit ausgebildet und an der Achse (8) des Fahrzeuganhängers (1) angeordnet. Hierfür zeigen Figur 3 bis 7 und 8 bis 10 verschiedene Möglichkeiten mit dem Anbau direkt am Achskörper oder am Widerlager (21). Bei mehrachsigen Fahrzeuganhängern (1) können ein oder mehrere Schlingerbremsen (13) in entsprechender Anordnung vorhanden sein. In weiterer Abwandlung lässt sich die Schlingerbremse (13) auch an anderer geeigneter Stelle des Fahrzeuganhängers (1) unterbringen.

Die Schlingerbremse (13) besitzt eine Energieversorgung (22), die in die Schlingerbremse (13) integriert sein kann, z.B. in Form einer Batterie. In der bevorzugten Ausführungsform ist die Energieversorgung (22) mit der Anhängerelektrik (nicht dargestellt) verbunden und erhält von dieser im Fahrbetrieb bei Anschluss an die Stromversorgung des Zugfahrzeugs die benötigte elektrische Energie. Die Energieversorgung (22) ist vorzugsweise elektrisch, kann aber auch von beliebiger anderer Natur sein.

Die Schlingerbremse (13) besteht aus einer Messeinrichtung (14), einer Steuerung (19) und einem Stellantrieb (15) mit einem Stellelement (17), welches mit dem Waagbalken (16) oder einem anderen geeigneten Verbindungselement in Eingriff treten und die Bremszüge (11) betätigen kann.

Die Messeinrichtung (14) dient zur Erkennung und Aufnahme von Schlingerbewegungen. Die beim Schlingern auftretenden Schwingungen sind durch ein bestimmtes Frequenzband gekennzeichnet. In der bevorzugten Ausführungsform werden hierbei Querbeschleunigungen des Fahrzeuganhängers (1) nach beiden Richtungen und über eine bestimmte Zeitdauer aufgenommen, um eine Unterscheidung von anderen im normalen Fahrbetrieb auftretenden Querbeschleunigungen treffen zu können. Außerdem wird die Gierrate, d.h. die Winkelgeschwindigkeit um die Hochachse, gemessen. Schlingerbewegungen werden anhand des vorgenannten Frequenzbandes erkannt. Zusätzlich können Längsbeschleunigungen erfasst werden. Auch eine Aufnahme von Neigungen des Fahrzeuganhängers um die Längsachse und ggf. auch um die Querachse sind möglich.

Die Messeinrichtung (14) kann von beliebig geeigneter konstruktiver Ausbildung sein und kann auch an beliebig geeigneter Stelle angeordnet sein. Im bevorzugten Ausführungsbeispiel sind die Komponenten der Schlingerbremse (13) zu einer integralen Baueinheit zusammengefasst, die in einem Gestell oder Gehäuse (20) untergebracht und an der Achse (8), vorzugsweise mittig, montiert ist. Das Gestell (20) kann an der Achse (8) in beliebiger Weise befestigt sein. In Figur 3 bis 7 ist es direkt am Achskörper (8) befestigt. Es kann bei einer Erstausrüstung z.B. angeschweißt sein. Für eine Nachrüstung an vorhandene Fahrzeuganhänger (1) kann eine Klemmbefestigung mittels Schellen oder dgl. vorgesehen sein. Bei einer Nachrüstung kann ggf. ein geeignetes zusätzliches Widerlager (21) am Gestell (20) angebracht sein.

Bei der integralen Ausführungsform ist die Messeinrichtung (14) ebenfalls an der Baueinheit und im Gestell (20) angeordnet. Figur 2 zeigt eine Variante, bei der eine Messeinheit (14) an einer heckseitige Ecke des Fahrzeuganhängers (1) angebracht und über entsprechende Leitungen mit der Steuerung (19) und der Energieversorgung (22) der Schlingerbremse (13) verbunden ist. An diesen Fahrzeugecken treten die größten Querbeschleunigungen auf, so dass hier die besten Messmöglichkeiten bestehen. Der Bau-und Montageaufwand ist etwas höher als bei der bevorzugten integralen Ausführung.

In der gezeigten Ausführungsform besteht die Messeinrichtung (14) aus einer ESP-Sensoranordnung mit ggf. mehreren verschiedenen Sensoren, die zumindest Querbeschleunigungen und ggf. die Gierrate sowie in einer erweiterten Ausführungsform zusätzlich Längsbeschleunigungen sowie Anhängerneigungen aufnehmen kann. Alternativ kann auch nur die Gierrate aufgenommen werden. Derartige ESP-Sensoranordnungen können mehrfach und an verschiedenen Stellen des Fahrzeuganhängers (1) angeordnet sein.

Die Steuerung (19) ist mit der Messeinrichtung (14) verbunden und kann in die ESP-Sensoranordnung integriert oder separat mit Anschluss an mehrere Sensoren angeordnet sein. Sie beinhaltet eine Vergleichs- und Regeleinrichtung, mit der die von der Messeinrichtung (14) gelieferten Messdaten ausgewertet und mit vorgegebenen Sollwerten verglichen werden. Außerdem kann ein interner Vergleich mit vorher aufgenommenen und gespeicherten Messwerten stattfinden, um die Reaktionen der Fahrzeuganhängers (1) auf die Funktion der Schlingerbremse (13) und die Betätigung der Radbremsen (9) zu ermitteln. Über die Steuerung (19) ist somit eine Regelung der Schlingerbremse (13) möglich.

Der Stellantrieb (15) weist einen Motor (18) und ein daran direkt angeschlossenes Kraft- und Weg übertragendes Stellelement (17) auf, welches mit dem Waagbalken (16) unmittelbar oder mittelbar über die Bremsübertragungseinrichtung (10) in Eingriff steht. Der Motor (18) ist mit der Steuerung (19) verbunden und wird von dieser gesteuert. Er besitzt ein schnelles Ansprechverhalten und eine hohe Beschleunigung, so dass er bei Aktivierung der Schlingerbremse (13) die Radbremsen (9) in einer kurzen Reaktionszeit von vorzugsweise unter 1 sec. betätigen kann. Der ggf. mit einem Getriebe (34) ausgerüstete Motor (18) steht mit dem Stellelement (17) in einer direkten Wirkverbindung, wobei er das Stellelement (17) in Betätigungs- oder Zugrichtung (23) der Bremsübertragungseinrichtung (10) gesteuert bewegt. Bei Beendigung des Schlingerns fährt die Steuerung (19) den Motor (18) wieder zur Bremslüftung in die Ausgangsstellung zurück. Die Motorbewegungen bestimmen dabei die Bremsbetätigung.

Die Stellkräfte und Stellbewegungen des von der Steuerung (19) beaufschlagten Motors (18) werden über das Stellelement (17) direkt auf den Waagbalken (16) zur Betätigung der Bremszüge (11) übertragen. Die Betätigung des Waagbalkens (16) und der Bremszüge (11) durch den Stellantrieb (15) bleibt während der Dauer des Schlingerbremsenbetriebs aufrecht erhalten. Der Stellantrieb (15) kann somit überden Motor (18) jederzeit die Bremswirkung steuern und in Reaktion auf das Schlingerverhalten regeln.

Der Motor (18) ist vorzugsweise als elektrischer Getriebemotor mit einem Getriebe (34), z.B. einem Planetengetriebe und einem vorzugsweise linear beweglichen Abtriebsorgan (40), z.B. einer ausfahrbaren Spindel, einer Zahnstange oder dergleichen ausgebildet. Er ist z.B. als sog. Elektrozylinder mit einer reibungsarmen Kugelumlaufspindel ausgestaltet. Das Abtriebsorgan (40), insbesondere in Form einer Gewindespindel, speziell einer Trapezspindel, kann alternativ selbsthemmend sein.

Das stangenartige Stellelement (17) kann einteilig oder mehrteilig sein und besteht z.B. aus dem Abtriebsorgan (40) und einem Betätigungselement (25), z.B. einer Schubstange, die in der Ausführungsform von Figur 3 bis 7 über einen Beschlag (29) miteinander verbunden und direkt gekuppelt sind. Hierdurch ergibt sich ein längenstabiles Stellelement (7) dessen Länge im Bremsbetrieb fest ist. Über einen ähnlichen Beschlag (29) kann der Motor (18) am rückwärtigen Ende am Gestell (20) gelagert sein. Die Beschläge (29) können begrenzte Winkelbewegungen an der Verbindungsstelle zulassen.

Das Stellelement (17) ist in der Variante von Figur 3 bis 7 stangenförmig und drucksteif ausgebildet. In der bevorzugten Ausführungsform ist der Stellantrieb (15) in Fahrtrichtung gesehen an der Rückseite der Achse (8) angeordnet, wobei sich das Verbindungselement (16) bzw. der Waagbalken, an der Vorderseite befindet. In diesem Fall steht das Stellelement (17) über die Schubstange (25) in einseitiger Anschlagverbindung mit dem Waagbalken (16). Es fährt bei einer Betätigung der Schlingerbremse (13) aus und übt Druckkräfte auf den Waagbalken (16) aus. Das Stellelement (17) kann in der inaktiven Ausgangsstellung am Waagbalken (16) anliegen oder mit geringem Abstand distanziert sein.

Das Stellelement (17) kann längenverstellbar ausgebildet sein und hierfür eine beliebig geeignete konstruktive Gestaltung haben, z.B. als Teleskopstange mit Arretiermöglichkeit in verschiedenen Auszugsstellungen. Dies erlaubt bei Nachrüstungen einen Einbau ohne Verstellung der vorhandenen Bremseinrichtung (4). Die Längenverstellung betrifft eine Grundeinstellung der Stellelement-Länge, die bei der Inbetriebnahme, bei Wartungsarbeiten oder bei der Notentriegelung vorgenommen wird und die im laufenden Betrieb im wesentlichen konstant bleibt.

Ferner ist das Stellelement (17) zumindest bereichsweise, insbesondere im Bereich der Schubstange (25), als Rohr ausgebildet und besitzt zumindest an seiner dem Waagbalken (16) zugewandten Vorderseite eine Rohröffnung (26). Mit dieser Rohröffnung (26) ist das Rohr bzw. die Schubstange (25) auf den rückwärtigen Zapfen (27) des Bremsgestänges (10) aufgesteckt und längsbeweglich geführt. Die Schubstange (25) liegt mit ihrem vorderen Ende am Mitnehmer (28) in einer einseitigen Mitnahmeverbindung, insbesondere einer Schubverbindung, an. Hierbei werden die Ausfahrbewegungen des Stellelements (17) über den Zapfen (27) und den Mitnehmer (28) mittelbar auf den Waagbalken (16) und die angehängten Bremszüge (11) übertragen. Hierbei kann auch bei Betätigung der Schlingerbremse (13) der Waagbalken (16) sich zum Ausgleich unterschiedlicher Bremskräfte schrägstellen. Die Schubstange (25) durchdringt das an der Unterseite des Achskörpers (8) angeordnete Widerlager (21) und kann in der dortigen Durchlassöffnung geführt sein.

Bei Betätigung der Schlingerbremse (13) und beim Anziehen der Bremszüge (11) kann das Bremsgestänge (10) in Zugrichtung (23) verschoben werden, was durch die Auflaufeinrichtung abgefangen wird. Die motorgetriebene Ausfahrbewegung des Stellelements (17) wird in Abhängigkeit von der Reaktion der Anhängerbewegungen auf die Bremskräfte geregelt. Solange die Schlingereffekte und insbesondere die Querbeschleunigungen, bestehen, wird die Bremswirkung aufrecht erhalten und ggf. vergrößert Wenn Schlingereffekte und Querbeschleunigungen nachlassen, wird der Motor (18) in gegenläufiger Richtung angesteuert und zieht das Stellelement (17) wieder ein. Die Rückholfedern in den Radbremsen (9) ziehen dabei die Bremszüge (11) und den Waagbalken (16) mitsamt dem Bremsgestänge (10) nach und in die Ausgangsstellung zurück.

Die Funktion der Schlingerbremse (13) kann vom Fahrzeuglenker durch eine Bremsreaktion und eine Betätigung der Betriebsbremse (5) überlagert werden. Durch die längsbewegliche Führung des Rohrs (25) auf dem Zapfen (27) kann sich dabei der Waagbalken (16) vom Stellelement (17) in Zugrichtung (23) entfernen. Diese Relativbewegung kann auch im normalen Fahr- und Bremsbetrieb und bei nicht aktiver Schlingerbremse (13) stattfinden.

Die Schlingerbremse (13) kann eine Nachführeinrichtung (30) (in Figur 3 bis 7 nicht dargestellt) aufweisen, um im Fahrbetrieb bei nicht betätigter Betriebsbremse (5) das Stellelement (17) in Anschlagposition am Verbindungselement (16) oder am Mitnehmer (28) zu halten. Wenn die Bremseinrichtung (4) mit einer Nachstelleinrichtung (24) zur Verschleißkompensation versehen ist, kann der Stellantrieb (15) dieser Kompensation folgen und den Anschlagkontakt des Stellelements (17) am Mitnehmer (28) oder am Verbindungselement (16) aufrecht erhalten. Dieses Nachführen kann ggf. gesteuertwerden, was auf verschiedene Weise möglich ist, z.B. durch eine Kontakt- oder Kraftmessung, eine Positionsmessung des Verbindungselementes (16) oder auf andere Weise.

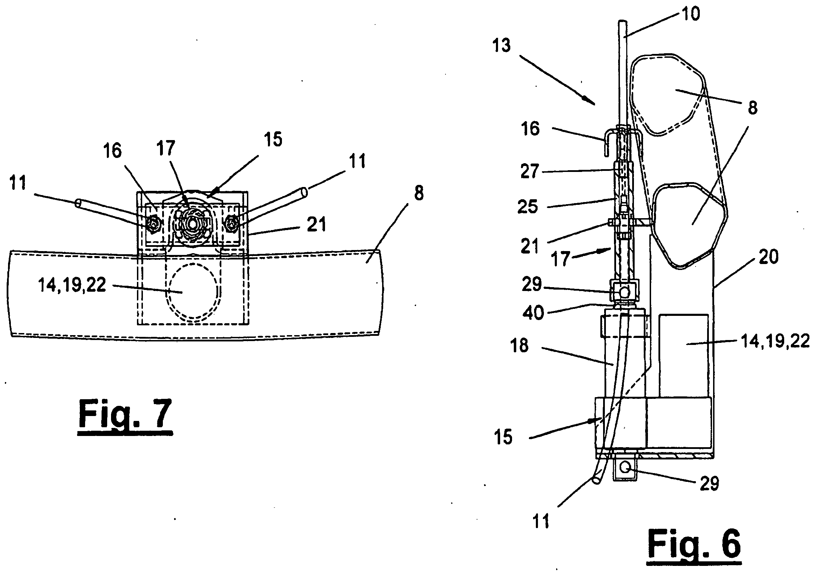

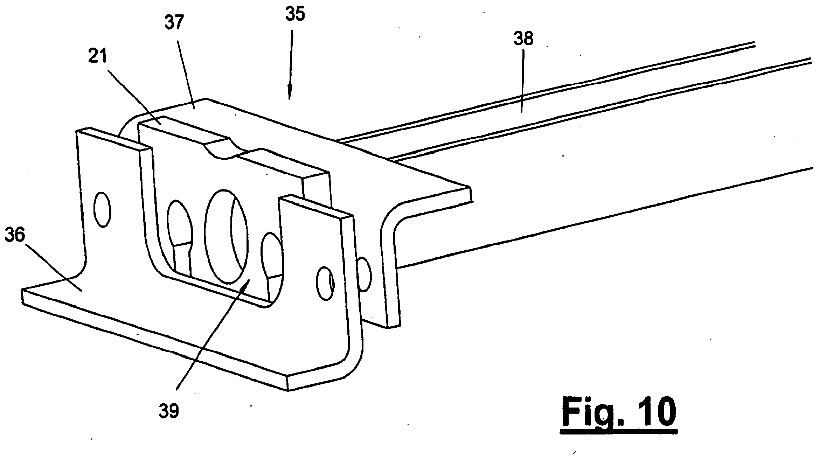

Figur 7 bis 9 zeigen verschiedene Varianten der Schlingerbremse (13). Die Abwandlungen betreffen zum einen die Montagemöglichkeit am Widerlager (21). Die Achskörper (8) können in ihrer Zahl, Form und Anordnung in vielfacher Weise variieren. Das Widerlager (21) ist hingegen meist an der gleichen Stelle am Achskörper angeordnet und variiert kaum in seiner Formgebung. Zur Befestigung des Gestells oder Gehäuses (20) am Widerlager (21) kann eine geeignete Halterung (35) eingesetzt werden, die vorzugsweise als Klemmeinrichtung ausgebildet ist. Figur 10 zeigt hierzu eine Ausführungsform im Detail. Die Halterung (35) besteht aus zwei abgewinkelten Klemmbacken (36,37), die im Innenbereich einen Ausschnitt (39) zur Durchführung der Bremszüge (11) und des Stellelements (17) aufweisen. Seitlich stehen die Klemmbacken (36,37) über die Ränder des Widerlagers (21) vor, wobei an diesen Überständen Klemmschrauben oder andere Spannmittel angesetzt werden. Die beiden Klemmbacken (36,37) spannen hierbei das plattenförmige Widerlager (21) zwischen ihren aufrechten Stegen ein. Durch diese Bauform bleibt das Widerlager (21) für Wartungs- und Installationsarbeiten frei, wobei auch die Bremszüge (11) ein- und ausgehängt werden können. Die eine Klemmbacke (37) kann ferner eine U-förmige Stützschiene zur Aufnahme des Gestells oder Gehäuses (20) aufweisen.

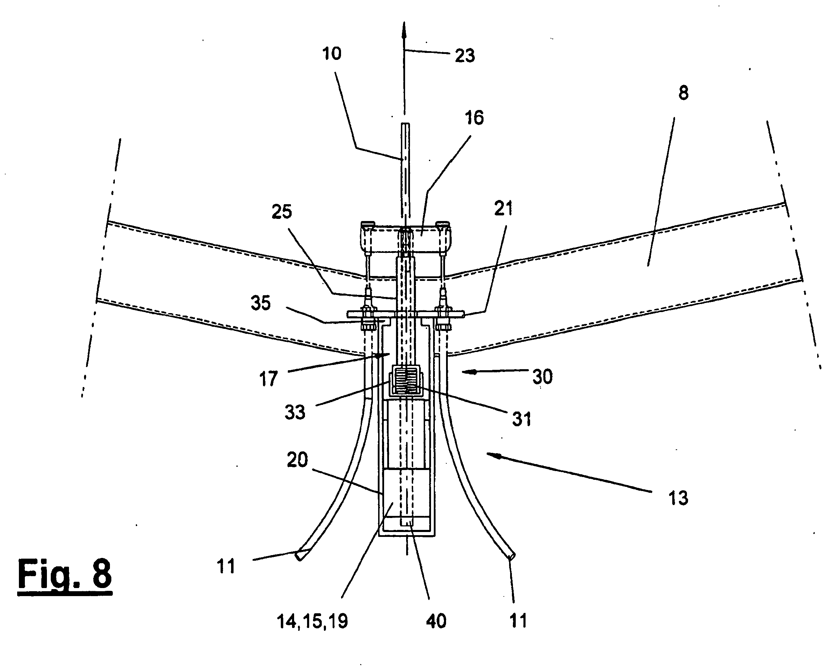

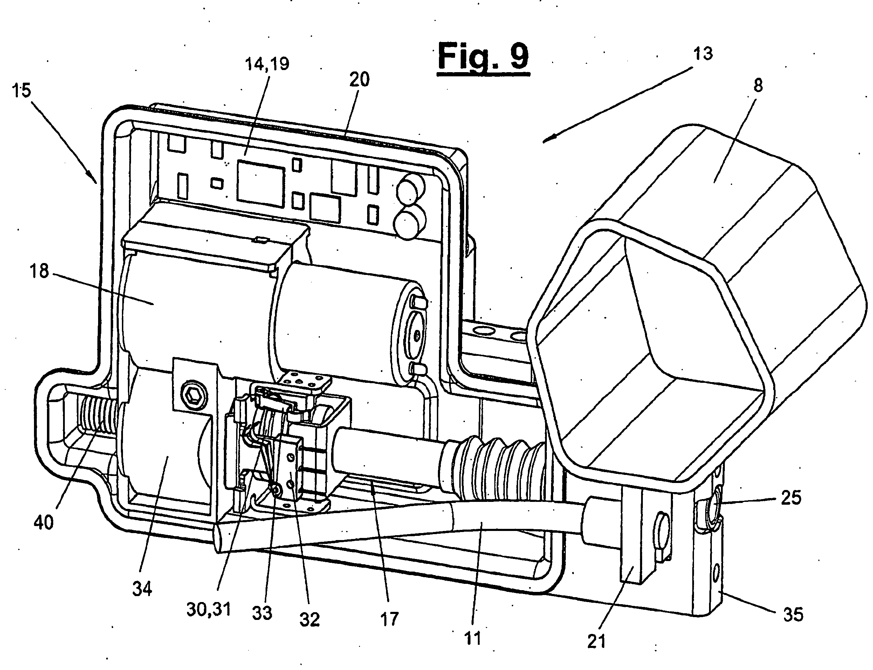

Figur 8 und 9 verdeutlichen eine weitere Abwandlung, welche die Gestaltung des Stellelements (17) betrifft. Bei dieser Variante sind das Abtriebsorgan (40) des Motors (18) und die Schubstange (25) durch eine Federeinheit (31) verbunden, welche zugleich eine Nachführeinrichtung (30) bilden kann. Durch die eingesetzte Federeinheit (31) ist eine axiale Relativbewegung zwischen Abtriebsorgan (40) und Schubstange (25) im Betrieb möglich. Die vorerwähnte Grundeinstellung der Stellelement-Länge kann hierdurch betriebsbedingt verändert werden. In Schubrichtung wird der Relativweg durch die auf Block fahrende Feder begrenzt. In Zugrichtung wird die Relativbewegung durch eine bügel- oder käfigartige Führung (33) begrenzt. Die Führung (33) besteht z.B. aus zwei einander überlappenden Bügeln, die miteinander über eine Zapfenführung mit Längsschlitz begrenzt axial beweglich verbunden sind, wobei auf der jeweils anderen Seite der eine Bügel mit dem Abzugsorgan (40) und der andere Bügel mit der Schubstange (25) verbunden ist. Durch die Führung (33) kann die Verbindung des Abtriebsorgans (40) mit der Schubstange (25) drehfest sein.

Im Schlingerbremsbetrieb drückt das Abtriebsorgan (40), z.B. die in Figur 9 gezeigte Spindel, auf die Federeinheit (31) und diese dann wieder auf die Schubstange (25). Die mit einer Druckfeder ausgerüstete Federeinheit (31) kann auch bei ausgeschaltetem Motor eine Federkraft auf die Schubstange (25) und über den Waagbalken (16) auf die Bremszüge (11) ausüben, so dass die Bremszüge (11) bei Auftreten von Setzungen im Bremsen- oder Seilzugbereich im Schlingerbremsbetrieb selbsttätig und ohne Motornachstellung nachgespannt werden können. Außerdem kann in entspannter Ruhestellung eine Verschleiß kompensierende Nachstellung der Bremszüge (11) erfolgen. In der Funktion als Nachführeinrichtung (30) kann die Federeinheit (31) außerdem die Schubstange (27) in ständigem Berührungskontakt mit dem Verbindungselement (16) bzw. dem Mitnehmer (28) halten. Die Schlingerbremse (13) spricht dadurch auf eine Motorbetätigung sofort an und betätigt verzögerungsfrei die Radbremsen.

An der Federeinheit (31) können außerdem ein oder mehrere Schalter (32), insbesondere mechanische Endschalter, induktive Wegsensoren, radiometrische Hallsensoren oder dgl., angebracht sein. Hierüber kann eine Kraftbegrenzung des Stellantriebs (15) realisiert werden. Dies ist auch für den Regelkreis Auflaufbremse (5) und Schlingerbremse (13) von Vorteil. Wenn z.B. bei aktivierter Auflaufbremse (5) die Schlingerbremse (13) ausgelöst wird und die Motorbewegung nur über die Stromaufnahme gesteuert wird, könnten die Radbremsen (9) übermäßig angezogen werden. Der Motor (18) und die selbsthemmende Spindel (40) würden dann auch in dieser Anzugstellung stehen bleiben. Die Federeinheit (31) wirkt in einem solchen Fall ausgleichend, wobei über den besagten Endschalter der Motor (18) abgeschaltet wird, wenn die Schubstange (25) bei angezogenen Radbremsen (9) stehen bleibt und die Spindel (40) weiter bis zur vorgegebenen Belastungs- und Beweggrenze ausfährt.

Andererseits kann auch eine Entspannung der Federeinheit (31) durch ein oder mehrere der Schalter (32) detektiert werden. Dies kann auf verschiedene Weise interpretiert und genutzt werden. In der ausgefahrenen Spannstellung oder Schlingerbremsstellung bei abgeschaltetem Motor (18) kann bei einer signifikanten Federentspannung der Motor (18) bedarfsweise bei anhaltendem Schlingern wieder eingeschaltet werden. Andererseits wird bei einem gesteuerten Einfahren des Motors (18) nach Behebung des Schlingerproblems der Entspannungsweg der Führungselemente bzw. der Bügel der Führung (33) schaltmäßig begrenzt. Bei Erreichen dieser vorgegebenen Entspannungsstellung kann der rücklaufende Motor (18) abgeschaltet werden. Die Schaltstellung kann so gewählt werden, dass die Federeinheit (31) noch unter Spannung steht und einen Restweg zum vorerwähnten Nachspannen der Bremszüge (11) ausführen kann.

Figur 9 zeigt eine Ausführung der Schlingerbremse (13), die sich besonders für eine Montage am Widerlager (21) eignet. Das Gehäuse (20) ist in diesem Fall schmal und ggf. nach vorn sich verjüngend gestaltet, so dass es am Widerlager (21) zwischen den Bremszügen (21) montiert werden kann. Die Halterung (35) ist in Figur 9 nur angedeutet. Sie kann in der in Figur 10 dargestellten Weise oder auch in anderer Art ausgebildet sein.

Im abgewinkelten Gehäuse (20) sind die Messeinrichtungen (14) und die Steuerung (19) im oberen abgewinkelten Gehäusebereich untergebracht. Darunter befindet sich der elektrische Motor (18) mit dem wiederum darunter oder daneben angeordneten Getriebe (34), vorzugsweise einem Planetengetriebe, welches auf das Abtriebsorgan (40), z.B. die dargestellte selbsthemmende Trapezspindel, einwirkt. Letztere ist fluchtend über die Federeinheit (31) mit der Schubstange (25) verbunden, welche sich entlang des vorderen schmalen Gehäusebereichs erstreckt und durch das Widerlager (21) ragt. In Figur 9 ist auch die mehrteilige Ausbildungsmöglichkeit des Stellelements (17) angedeutet. Beispielsweise kann die Schubstange (25) aus zwei miteinander verbundenen Hälften bestehen, die z.B. über ein Gewinde längsverstellbarverbunden sind. Über diese Längenverstellung kann die eingangs erwähnte Anpassung der Schlingerbremse (13) an die unterschiedlichen Einbausituationen erfolgen. Andererseits ist hierüber auch eine Notentriegelung gegeben. Falls der Stellantrieb (15) ausfällt oder anderweitig blockiert und die ausgefahrene Schlingerbremsstellung nicht mehr motorisch gelöstwerden kann, lässt sich eine Notentriegelung durch Eindrehen des vorderen Schubstangenteils erreichen.

Abwandlungen der gezeigten Ausführungsform sind in verschiedener Weise möglich. Zum einen kann die Schlingerbremse (13) an der Vorderseite des Achskörpers (8) angeordnet sein, wobei das Stellelement (17) als zugfeste oder ggf. begrenzt federnde Zugstange ausgebildet ist, welche im Schlingerfall die Bremszüge (11) durch eine Einfahrbewegung spannt. In diesem wie auch im beschriebenen Ausführungsbeispiel kann das Zugelement (17) neben der Bremsübertragungseinrichtung (10) und direkt am Verbindungselement (16) angreifen. Ferner ist es bei einer entsprechenden Antriebsgestaltung möglich, das Stellelement (17) mit beidseitiger Zug- und Druckwirkung an das Verbindungselement (16) anzuschließen. Das Stellelement (17) folgt dadurch allen Bewegungen des Verbindungselements (16), auch im normalen Betriebsbremsfall. Die Schlingerbremse (13) kann hierbei durch eine angesteuerte Kupplung, einen deaktivierten Stellantrieb (15) oder auf andere Weise in den normalen Betriebsfällen abgeschaltet und erst im Schlingerfall zugeschaltet werden. Ferner ist es möglich, das Stellelement (17) statt am Verbindungselement (16) direkt an der Bremsübertragungseinrichtung (10) anzuschließen. Auch in diesem Fall ist eine direkte Verbindung zwischen den Bremszügen (11) und dem Stellantrieb (15) gegeben, die eine permanente Steuerung oder Regelung der Schlingerbremswirkung ermöglicht. Variabel sind ferner die konstruktiven Ausgestaltungen der Schlingerbremse (13), insbesondere die Ausbildung des Motors (18) und des Stellelements (17). Der Motor (40) kann z.B. ein hydraulischer oder pneumatischer Antrieb sein. Desgleichen kann sein Abtriebsorgan (4) anders ausgebildet sein und eine andere Abtriebsbewegung erzeugen. Die verschiedenen Komponenten der Schlingerbremse (13) können getrennt voneinander und an unterschiedlichen Stellen des Fahrzeuganhängers (1) angeordnet werden.

### BEZUGSZEICHENLISTE

- 1: Fahrzeuganhänger
- 2: Fahrgestell
- 3: Anhängerkupplung
- 4: Bremseinrichtung
- 5: Bremseinrichtung, Betriebsbremse, Auflaufbremse
- 6: Bremseinrichtung, Handbremseinrichtung
- 7: Deichsel
- 8: Achse
- 9: Radbremse
- 10: Bremsübertragungseinrichtung, Bremsgestänge
- 11: Bremszug
- 12: Längsträger
- 13: Schlingerbremse
- 14: Messeinrichtung
- 15: Stellantrieb
- 16: Verbindungselement, Waagbalken
- 17: Stellelement
- 18: Motor
- 19: Steuerung
- 20: Gestell, Gehäuse
- 21: Widerlager
- 22: Energieversorgung
- 23: Zugrichtung
- 24: Nachstelleinrichtung
- 25: Schubstange, Rohr
- 26: Rohröffnung
- 27: Zapfen
- 28: Mitnehmer
- 29: Beschlag
- 30: Nachführeinrichtung
- 31: Federeinheit
- 32: Schalter
- 33: Führung
- 34: Getriebe
- 35: Halterung, Klemmeinrichtung
- 36: Klemmbacke
- 37: Klemmbacke
- 38: Stützschiene
- 39: Ausschnitt
- 40: Abtriebsorgan, Spindel

## Patentansprüche

1. Schlingerbremse für gebremste Fahrzeuganhänger (1) mit einer als Bremsgestänge oder als Bremsseil ausgebildeten Bremsübertragungseinrichtung (10), und mindestens einem Bremszug (11), wobei die Bremsübertragungseinrichtung (10) und der Bremszug (11) durch ein Verbindungselement (16), insbesondere einen Waagbalken, miteinander verbunden sind, wobei die Schlingerbremse (13) eine Messeinrichtung (14) zur Erkennung von Schlingererscheinungen und einen Stellantrieb (15) mit einem Motor (18) und einem Stellelement (17) aufweist, welches mit der Bremsübertragungseinrichtung (10) oder mit dem Verbindungselement (16) in Eingriff bringbar ist, wobei die Messeinrichtung (14) und der Motor (18) mit einer Steuerung (19) verbunden sind, welche die Motorbewegungen steuert, wobei der Motor (18) und das Stellelement (17) in einer direkten Wirkverbindung stehen und der Motor (18) das Stellelement (17) gesteuert bewegt, **dadurch gekennzeichnet, dass** die Schlingerbremse (13) ein Gestell (20) zur Montage des Stellantriebs (15) und seiner Teile an einer Achse (8) des Fahrzeuganhängers (1) aufweist, wobei das Gestell (20) eine Halterung (35) zur Montage an einem achsseitigen Widerlager (21) für die Bremszüge (11) aufweist.

2. Schlingerbremse für gebremste Fahrzeuganhänger (1) mit einer als Bremsgestänge oder als Bremsseil ausgebildeten Bremsübertragungseinrichtung (10), und mindestens einem Bremszug (11), wobei die Bremsübertragungseinrichtung (10) und der Bremszug (11) durch ein Verbindungselement (16), insbesondere einen Waagbalken, miteinander verbunden sind, wobei die Schlingerbremse (13) eine Messeinrichtung (14) zur Erkennung von Schlingererscheinungen und einen Stellantrieb (15) mit einem Motor (18) und einem Stellelement (17) aufweist, welches mit der Bremsübertragungseinrichtung (10) oder mit dem Verbindungselement (16) in Eingriff bringbar ist, wobei die Messeinrichtung (14) und der Motor (18) mit einer Steuerung (19) verbunden sind, welche die Motorbewegungen steuert, wobei der Motor (18) und das Stellelement (17) in einer direkten Wirkverbindung stehen und der Motor (18) das Stellelement (17) gesteuert bewegt, **dadurch gekennzeichnet, dass** die Schlingerbremse (13) ein Gestell (20) zur Montage des Stellantriebs (15) und seiner Teile an einer Achse (8) des Fahrzeuganhängers (1) aufweist, wobei das Stellelement (17) stangenförmig ausgebildet ist und mit dem Verbindungselement (16) in einer einseitigen Schubverbindung steht.

3. Schlingerbremse für gebremste Fahrzeuganhänger (1) mit einer als Bremsgestänge oder als Bremsseil ausgebildeten Bremsübertragungseinrichtung (10), und mindestens einem Bremszug (11), wobei die Bremsübertragungseinrichtung (10) und der Bremszug (11) durch ein Verbindungselement (16), insbesondere einen Waagbalken, miteinander verbunden sind, wobei die Schlingerbremse (13) eine Messeinrichtung (14) zur Erkennung von Schlingererscheinungen und einen Stellantrieb (15) mit einem Motor (18) und einem Stellelement (17) aufweist, welches mit der Bremsübertragungseinrichtung (10) oder mit dem Verbindungselement (16) in Eingriff bringbar ist, wobei die Messeinrichtung (14) und der Motor (18) mit einer Steuerung (19) verbunden sind, welche die Motorbewegungen steuert, wobei der Motor (18) und das Stellelement (17) in einer direkten Wirkverbindung stehen und der Motor (18) das Stellelement (17) gesteuert bewegt, **dadurch gekennzeichnet, dass** die Messeinrichtung (14) und die Steuerung (19) am Stellantrieb (15) angeordnet sind.

4. Schlingerbremse nach Anspruch 1 oder 3, **dadurch gekennzeichnet, dass** das Stellelement (17) stangenförmig ausgebildet ist und mit dem Verbindungselement (16) in einer einseitigen Schub- oder Zugverbindung steht und mittelbar oder unmittelbar auf das Verbindungselement (16) einwirkt.

5. Schlingerbremse nach Anspruch 1, 2 oder 3, **dadurch gekennzeichnet, dass** das Stellelement (17) direkt an der Bremsübertragungseinrichtung (10) angeschlossen ist.

6. Schlingerbremse nach einem der vorhergehenden Ansprüche, **dadurch gekennzeichnet, dass** das Stellelement (17) längenverstellbar ausgebildet ist.

7. Schlingerbremse nach einem der vorhergehenden Ansprüche, **dadurch gekennzeichnet, dass** das Stellelement (17) einteilig oder mehrteilig ausgebildet ist.

8. Schlingerbremse nach einem der vorhergehenden Ansprüche, **dadurch gekennzeichnet, dass** das Stellelement (17) aus einem Abtriebsorgan (40) des Motors (18) und einem Betätigungselement (25) besteht, die miteinander längenstabil verbunden sind.

9. Schlingerbremse nach einem der vorhergehenden Ansprüche, **dadurch gekennzeichnet, dass** die Bremsübertragungseinrichtung (10) die Bremskräfte einer Betriebsbremse (5), insbesondere einer Auflaufbremse, und einer Handbremseinrichtung (6) überträgt.

10. Schlingerbremse nach einem der vorhergehenden Ansprüche, **dadurch gekennzeichnet, dass** die Motorbewegungen der Schlingerbremse (13) die Bremsbetätigung und die Bewegungen des Stellelements (17) bestimmen.

11. Schlingerbremse nach einem der vorhergehenden Ansprüche, **dadurch gekennzeichnet, dass** der Motor (18) das Stellelement (17) in Betätigungs- oder Zugrichtung (23) der Bremsübertragungseinrichtung (10) gesteuert bewegt.

12. Schlingerbremse nach einem der vorhergehenden Ansprüche, **dadurch gekennzeichnet, dass** die Kraft des Stellantriebs (15) begrenzt ist.

13. Schlingerbremse nach einem der vorhergehenden Ansprüche, **dadurch gekennzeichnet, dass** die Schlingerbremse (13) eine Nachführeinrichtung (30) für das Stellelement (17) aufweist.

14. Schlingerbremse nach einem der vorhergehenden Ansprüche, **dadurch gekennzeichnet, dass** das Abtriebsorgan (40) des Motors (18) selbsthemmend ausgebildet ist.

15. Schlingerbremse nach einem der vorhergehenden Ansprüche, **dadurch gekennzeichnet, dass** der Motor (18) als elektrischer Getriebemotor mit einer ausfahrbaren Spindel oder Zahnstange ausgebildet ist.

16. Schlingerbremse nach einem der vorhergehenden Ansprüche, **dadurch gekennzeichnet, dass** die Steuerung (19) eine Vergleichs- und Regeleinrichtung aufweist, welche den Stellantrieb (15) regelt.

17. Schlingerbremse nach einem der vorhergehenden Ansprüche, **dadurch gekennzeichnet, dass** die Messeinrichtung (14) einen mindestens einachsigen Beschleunigungsaufnehmer aufweist.

18. Schlingerbremse nach einem der vorhergehenden Ansprüche, **dadurch gekennzeichnet, dass** die Messeinrichtung (14) eine ESP-Sensoranordnung zur Messung von Quer- und/oder Längsbeschleunigungen und/oder der Gierrate des Fahrzeuganhängers (1) aufweist.

19. Schlingerbremse nach Anspruch 1, 2 oder einem der Ansprüche 4 bis 17, **dadurch gekennzeichnet, dass** die Messeinrichtung (14) und die Steuerung (19) am Stellantrieb (15) angeordnet sind.

20. Schlingerbremse nach Anspruch 3 oder einem der Ansprüche 4 bis 18, **dadurch gekennzeichnet, dass** die Schlingerbremse (13) ein Gestell (20) zur Montage des Stellantriebs (15) und seiner Teile an einer Achse (8) des Fahrzeuganhängers (1) aufweist.

21. Schlingerbremse nach einem der vorhergehenden Ansprüche, **dadurch gekennzeichnet, dass** die Schlingerbremse (13) eine mit der Anhängerelektrik verbundene Energieversorgung (22) aufweist.

22. Fahrzeuganhänger (1) mit mindestens einer Achse (8) und mit einer Bremseinrichtung (4), die Radbremsen (9), eine Betriebsbremse (5), insbesondere eine Auflaufbremse, eine als Bremsgestänge oder als Bremsseil ausgebildete Bremsübertragungseinrichtung (10) und mindestens einen Bremszug (11) sowie mindestens ein Verbindungselement (16), insbesondere einen Waagbalken, zwischen der Bremsübertragungseinrichtung (10) und dem Bremszug (11) aufweist, **dadurch gekennzeichnet, dass** der Fahrzeuganhänger (1) eine Schlingerbremse (13) nach einem der Ansprüche 1 bis 21 aufweist.

23. Fahrzeuganhänger nach Anspruch 22, **dadurch gekennzeichnet, dass** der Fahrzeuganhänger (1) eine auf die Bremsübertragungseinrichtung (10) wirkende Handbremseinrichtung (6) aufweist.

## Claims

1. Roll brake for braked vehicle trailers (1) having a brake transmission device (10) designed as a brake linkage or as a brake wire, and having at least one brake cable (11), the brake transmission device (10) and the brake cable (11) being connected to one another by means of a connecting element (16), in particular a balance arm, with the roll brake (13) having a measuring device (14) for detecting instances of roll and having an actuating drive (15) with a motor (18) and an actuating element (17) which can be placed in engagement with the brake transmission device (10) or with the connecting element (16), with the measuring device (14) and the motor (18) being connected to a controller (19) which controls the motor movements, with the motor (18) and the actuating element (17) being directly operatively connected, and with the motor (18) moving the actuating element (17) in a controlled manner, **characterized in that** the roll brake (13) has a frame (20) for mounting the actuating drive (15) and its parts on an axle (8) of the vehicle trailer (1), with the frame (20) having a bracket (35) for mounting on an axle-mounted counterbearing (21) for the brake cables (11).

2. Roll brake for braked vehicle trailers (1) having a brake transmission device (10) designed as a brake linkage or as a brake wire, and having at least one brake cable (11), the brake transmission device (10) and the brake cable (11) being connected to one another by means of a connecting element (16), in particular a balance arm, with the roll brake (13) having a measuring device (14) for detecting instances of roll and having an actuating drive (15) with a motor (18) and an actuating element (17) which can be placed in engagement with the brake transmission device (10) or with the connecting element (16), with the measuring device (14) and the motor (18) being connected to a controller (19) which controls the motor movements, with the motor (18) and the actuating element (17) being directly operatively connected, and with the motor (18) moving the actuating element (17) in a controlled manner, **characterized in that** the roll brake (13) has a frame (20) for mounting the actuating drive (15) and its parts on an axle (8) of the vehicle trailer (1), with the actuating element (17) being of rod-shaped design and being connected at one side with a thrust connection to the connecting element (16).

3. Roll brake for braked vehicle trailers (1) having a brake transmission device (10) designed as a brake linkage or as a brake wire, and having at least one brake cable (11), the brake transmission device (10) and the brake cable (11) being connected to one another by means of a connecting element (16), in particular a balance arm, with the roll brake (13) having a measuring device (14) for detecting instances of roll and having an actuating drive (15) with a motor (18) and an actuating element (17) which can be placed in engagement with the brake transmission device (10) or with the connecting element (16), with the measuring device (14) and the motor (18) being connected to a controller (19) which controls the motor movements, with the motor (18) and the actuating element (17) being directly operatively connected, and with the motor (18) moving the actuating element (17) in a controlled manner, **characterized in that** the measuring device (14) and the controller (19) are arranged on the actuating drive (15).

4. Roll brake according to Claim 1 or 3, **characterized in that** the actuating element (17) is of rod-shaped design and is connected at one side with a thrust connection or tensile connection to the connecting element (16) and acts indirectly or directly on the connecting element (16).

5. Roll brake according to Claim 1, 2 or 3, **characterized in that** the actuating element (17) is attached directly to the brake transmission device (10).

6. Roll brake according to one of the preceding claims, **characterized in that** the actuating element (17) is designed so as to be adjustable in length.

7. Roll brake according to one of the preceding claims, **characterized in that** the actuating element (17) is of single-part or multi-part design.

8. Roll brake according to one of the preceding claims, **characterized in that** the actuating element (17) is composed of a drive element (40) of the motor (18) and an actuating element (25), which drive element (40) and actuating element (25) are connected to one another in a stable fashion in terms of length.

9. Roll brake according to one of the preceding claims, **characterized in that** the brake transmission device (10) transmits the braking forces of a service brake (5), in particular an overrun brake, and of a handbrake device (6).

10. Roll brake according to one of the preceding claims, **characterized in that** the motor movements of the roll brake (13) determine the brake actuation and the movements of the actuating element (17).

11. Roll brake according to one of the preceding claims, **characterized in that** the motor (18) moves the actuating element (17) in the actuating or tension direction (23) of the brake transmission device (10) in a controlled fashion.

12. Roll brake according to one of the preceding claims, **characterized in that** the force of the actuating drive (15) is limited.

13. Roll brake according to one of the preceding claims, **characterized in that** the roll brake (13) has a follow-up device (30) for the actuating element (17).

14. Roll brake according to one of the preceding claims, **characterized in that** the drive element (40) of the motor (18) is of self-locking design.

15. Roll brake according to one of the preceding claims, **characterized in that** the motor (18) is embodied as an electric gear motor with an extensible spindle or toothed rack.

16. Roll brake according to one of the preceding claims, **characterized in that** the controller (19) has a comparison and regulating device which regulates the actuating drive (15).

17. Roll brake according to one of the preceding claims, **characterized in that** the measuring device (14) has an at least uniaxial acceleration sensor.

18. Roll brake according to one of the preceding claims, **characterized in that** the measuring device (14) has an ESP sensor arrangement for measuring transverse and/or longitudinal accelerations and/or the yaw rate of the vehicle trailer (1).

19. Roll brake according to Claim 1, 2 or one of Claims 4 to 17, **characterized in that** the measuring device (14) and the controller (19) are arranged on the actuating drive (15).

20. Roll brake according to Claim 3 or one of Claims 4 to 18, **characterized in that** the roll brake (13) has a frame (20) for mounting the actuating drive (15) and its parts on an axle (8) of the vehicle trailer (1).

21. Roll brake according to one of the preceding claims, **characterized in that** the roll brake (13) has a power supply (22) which is connected to the trailer electronics.

22. Vehicle trailer (1) having at least one axle (8) and having a brake device (4) which has wheel brakes (9), a service brake (5), in particular an overrun brake, a brake transmission device (10) designed as a brake linkage or as a brake wire, and at least one brake cable (11) and also at least one connecting element (16), in particular a balance arm, between the brake transmission device (10) and the brake cable (11), **characterized in that** the vehicle trailer (1) has a roll brake (13) according to one of Claims 1 to 21.

23. Vehicle trailer according to Claim 22, **characterized in that** the vehicle trailer (1) has a handbrake device (6) which acts on the brake transmission device (10).

## Revendications

1. Frein antiroulis pour des remorques de véhicule freinées (1), comprenant un dispositif de transfert de freinage (10) réalisé en forme de tringlerie de frein ou de tirette à câble de frein, et au moins un câble de frein (11), le dispositif de transfert de freinage (10) et le câble de frein (11) étant connectés l'un à l'autre par un élément de connexion (16), notamment un fléau, le frein antiroulis (13) présentant un dispositif de mesure (14) pour détecter les effets de roulis et un entraînement de commande (15) avec un moteur (18) et un élément de commande (17), qui peut être amené en prise avec le dispositif de transfert de freinage (10) ou avec l'élément de connexion (16), le dispositif de mesure (14) et le moteur (18) étant connectés à une commande (19) qui commande les mouvements du moteur, le moteur (18) et l'élément de commande (17) étant en liaison fonctionnelle directe et le moteur (18) déplaçant l'élément de commande (17) de manière commandée, **caractérisé en ce que** le frein antiroulis (13) présente un bâti (20) pour le montage de l'entraînement de commande (15) et de ses pièces sur un essieu (8) de la remorque du véhicule (1), le bâti (20) présentant une fixation (35) pour le montage sur une butée (21) du côté de l'essieu pour le câble de frein (11).

2. Frein antiroulis pour des remorques de véhicule freinées (1), comprenant un dispositif de transfert de freinage (10) réalisé en forme de tringlerie de frein ou de tirette à câble de frein, et au moins un câble de frein (11), le dispositif de transfert de freinage (10) et le câble de frein (11) étant connectés l'un à l'autre par un élément de connexion (16), notamment un fléau, le frein antiroulis (13) présentant un dispositif de mesure (14) pour détecter les effets de roulis et un entraînement de commande (15) avec un moteur (18) et un élément de commande (17), qui peut être amené en prise avec le dispositif de transfert de freinage (10) ou avec l'élément de connexion (16), le dispositif de mesure (14) et le moteur (18) étant connectés à une commande (19) qui commande les mouvements du moteur, le moteur (18) et l'élément de commande (17) étant en liaison fonctionnelle directe et le moteur (18) déplaçant l'élément de commande (17) de manière commandée, **caractérisé en ce que** le frein antiroulis (13) présente un bâti (20) pour le montage de l'entraînement de commande (15) et de ses pièces sur un essieu (8) de la remorque du véhicule (1), l'élément de commande (17) étant réalisé en forme de barre et étant en liaison unilatérale de poussée avec l'élément de connexion (16).

3. Frein antiroulis pour des remorques de véhicule freinées (1), comprenant un dispositif de transfert de freinage (10) réalisé en forme de tringlerie de frein ou de tirette à câble de frein, et au moins un câble de frein (11), le dispositif de transfert de freinage (10) et le câble de frein (11) étant connectés l'un à l'autre par un élément de connexion (16), notamment un fléau, le frein antiroulis (13) présentant un dispositif de mesure (14) pour détecter les effets de roulis et un entraînement de commande (15) avec un moteur (18) et un élément de commande (17), qui peut être amené en prise avec le dispositif de transfert de freinage (10) ou avec l'élément de connexion (16), le dispositif de mesure (14) et le moteur (18) étant connectés à une commande (19) qui commande les mouvements du moteur, le moteur (18) et l'élément de commande (17) étant en liaison fonctionnelle directe et le moteur (18) déplaçant l'élément de commande (17) de manière commandée, **caractérisé en ce que** le dispositif de mesure (14) et la commande (19) sont disposés sur l'entraînement de commande (15).

4. Frein antiroulis selon la revendication 1 ou 3, **caractérisé en ce que** l'élément de commande (17) est réalisé en forme de barre et est en liaison unilatérale de poussée ou de traction avec l'élément de connexion (16) et agit de manière directe ou indirecte sur l'élément de connexion (16).

5. Frein antiroulis selon la revendication 1, 2 ou 3, **caractérisé en ce que** l'élément de commande (17) est raccordé directement au dispositif de transfert de freinage (10).

6. Frein antiroulis selon l'une quelconque des revendications précédentes, **caractérisé en ce que** l'élément de commande (17) est réalisé de manière déplaçable en longueur.

7. Frein antiroulis selon l'une quelconque des revendications précédentes, **caractérisé en ce que** l'élément de commande (17) est réalisé en une seule partie ou en plusieurs parties.

8. Frein antiroulis selon l'une quelconque des revendications précédentes, **caractérisé en ce que** l'élément de commande (17) se compose d'un organe de sortie (40) du moteur (18) et d'un élément d'actionnement (25), qui sont connectés les uns aux autres de manière stable en longueur.

9. Frein antiroulis selon l'une quelconque des revendications précédentes, **caractérisé en ce que** le dispositif de transfert de freinage (10) transfère les forces de freinage d'un frein de service (5), notamment d'un frein à inertie, et d'un dispositif de frein à main (6).

10. Frein antiroulis selon l'une quelconque des revendications précédentes, **caractérisé en ce que** les mouvements du moteur du frein antiroulis (13) définissent l'actionnement du frein et les mouvements de l'élément de commande (17).

11. Frein antiroulis selon l'une quelconque des revendications précédentes, **caractérisé en ce que** le moteur (18) déplace l'élément de commande (17) de manière commandée dans la direction d'actionnement ou de traction (23) du dispositif de transfert de freinage (10).

12. Frein antiroulis selon l'une quelconque des revendications précédentes, **caractérisé en ce que** la force de l'entraînement de commande (15) est limitée.

13. Frein antiroulis selon l'une quelconque des revendications précédentes, **caractérisé en ce que** le frein antiroulis (13) présente un dispositif de poursuite (30) pour l'élément de commande (17).

14. Frein antiroulis selon l'une quelconque des revendications précédentes, **caractérisé en ce que** l'organe de sortie (40) du moteur (18) est réalisé de manière autobloquante.

15. Frein antiroulis selon l'une quelconque des revendications précédentes, **caractérisé en ce que** le moteur (18) est réalisé sous forme de motoréducteur électrique avec une broche déployable ou une crémaillère.

16. Frein antiroulis selon l'une quelconque des revendications précédentes, **caractérisé en ce que** la commande (19) présente un dispositif de comparaison et de régulation qui régule l'entraînement de commande (15).

17. Frein antiroulis selon l'une quelconque des revendications précédentes, **caractérisé en ce que** le dispositif de mesure (14) présente un capteur d'accélération à au moins un axe.

18. Frein antiroulis selon l'une quelconque des revendications précédentes, **caractérisé en ce que** le dispositif de mesure (14) présente un agencement de capteur ESP pour la mesure d'accélérations transversales et/ou longitudinales, et/ou de la vitesse de lacet de la remorque du véhicule (1).

19. Frein antiroulis selon la revendication 1, 2 ou l'une quelconque des revendications 4 à 17, **caractérisé en ce que** le dispositif de mesure (14) et la commande (19) sont disposés sur l'entraînement de commande (15).

20. Frein antiroulis selon la revendication 3 ou l'une quelconque des revendications 4 à 18, **caractérisé en ce que** le frein antiroulis (13) présente un bâti (20) pour le montage de l'entraînement de commande (15) et de ses pièces sur un essieu (8) de la remorque du véhicule (1).

21. Frein antiroulis selon l'une quelconque des revendications précédentes, **caractérisé en ce que** le frein antiroulis (13) présente une alimentation en puissance (22) connectée au système électrique de la remorque.

22. Remorque de véhicule (1) comprenant au moins un essieu (8) et un dispositif de freinage (4), les freins des roues (9), un frein de service (5), notamment un frein à inertie, un dispositif de transfert de freinage (10) réalisé sous forme de tringlerie de frein ou de tirette à câble de frein, et au moins un câble de frein (11) ainsi qu'au moins un élément de connexion (16), notamment un fléau, entre le dispositif de transfert de freinage (10) et le câble de frein (11), **caractérisée en ce que** la remorque de véhicule (1) présente un frein antiroulis (13) selon l'une quelconque des revendications 1 à 21.

23. Remorque de véhicule selon la revendication 22, **caractérisée en ce que** la remorque de véhicule (1) présente un dispositif de frein à main (6) agissant sur le dispositif de transfert de freinage (10).
